(19) **Europäisches Patentamt**

**European Patent Office**

**Office européen des brevets**

(11) **EP 1 005 695 B1**

(12) **EUROPÄISCHE PATENTSCHRIFT**

(45) Veröffentlichungstag und Bekanntmachung des Hinweises auf die Patenterteilung:
**11.07.2001 Patentblatt 2001/28**

(51) Int Cl.⁷: **G11B 20/00**

(21) Anmeldenummer: **98937484.8**

(86) Internationale Anmeldenummer:
**PCT/EP98/03603**

(22) Anmeldetag: **15.06.1998**

(87) Internationale Veröffentlichungsnummer:
**WO 99/10886 (04.03.1999 Gazette 1999/09)**

(54) **VERFAHREN UND VORRICHTUNG ZUM ERFASSEN EINES ANSCHLAGS IN EINEM ZEITDISKRETEN AUDIOSIGNAL**

METHOD AND DEVICE FOR DETECTING A TRANSIENT IN A DISCRETE-TIME AUDIOSIGNAL, AND DEVICE AND METHOD FOR CODING AN AUDIOSIGNAL

PROCEDE ET DISPOSITIF PERMETTANT DE DETECTER UN TRANSITOIRE DANS UN SIGNAL AUDIO DISCONTINU, ET DISPOSITIF ET PROCEDE DE CODAGE D'UN SIGNAL AUDIO

(84) Benannte Vertragsstaaten:
**AT BE CH DE DK FR GB IE IT LI NL SE**

(30) Priorität: **22.08.1997 DE 19736669**

(43) Veröffentlichungstag der Anmeldung:
**07.06.2000 Patentblatt 2000/23**

(73) Patentinhaber: **FRAUNHOFER-GESELLSCHAFT ZUR FÖRDERUNG DER ANGEWANDTEN FORSCHUNG E.V. 80636 München (DE)**

(72) Erfinder:
 • **HILPERT, Johannes**
 **D-90763 Fürth (DE)**
 • **HERRE, Jürgen**
 **D-91054 Buckenhof (DE)**

 • **GRILL, Bernhard**
 **D-91207 Lauf (DE)**
 • **BUCHTA, Rainer**
 **D-91074 Herzogenaurach (DE)**
 • **BRANDENBURG, Karlheinz**
 **D-91054 Erlangen (DE)**
 • **GERHÄUSER, Heinz**
 **D-91344 Waischenfeld (DE)**

(74) Vertreter: **Schoppe, Fritz, Dipl.-Ing. Schoppe, Zimmermann & Stöckeler Patentanwälte Postfach 71 08 67 81458 München (DE)**

(56) Entgegenhaltungen:
**EP-A- 0 687 073      US-A- 5 414 795
US-A- 5 451 954**

**Beschreibung**

Die vorliegende Erfindung bezieht sich auf die Codierung von Audiosignalen und insbesondere auf das Codieren von Audiosignalen, die Anschläge aufweisen, d. h. die transient sind.

Bei der gehörangepaßten Codierung zur Datenreduktion von Audiosignalen erfolgt die Codierung der Audiosignale zumeist im Frequenzbereich. Dies bedeutet, daß Ausgangswerte einer Zeit-Frequenz-Transformation quantisiert werden und anschließend in einen Bitstrom geschrieben werden, welcher gespeichert oder übertragen werden kann. Ein psychoakustisches Modell, das in dem Codierer implementiert ist, berechnet eine momentane Mithör- oder Maskierungsschwelle und steuert die Quantisierung der Ausgangswerte der Zeit-Frequenz-Transformation so, daß der Codierungsfehler, d. h. der Quantisierungsfehler, spektral geformt wird und unter dieser Schwelle liegt, damit derselbe unhörbar ist. Durch diese Maßnahme ist der Codierungsfehler jedoch zeitlich über der Zahl von Abtastwerten konstant, welche der Länge des Transformationsfensters entspricht. Die Mithör- oder Maskierungsschwelle ist in M. Zollner, E. Zwicker, Elektroakustik, Springer-Verlag, Berlin, Heidelberg, New York, 3. Auflage, 1993 dargestellt.

Um die Berechnung der Mithörschwelle im Frequenzbereich möglichst exakt durchführen zu können, ist eine hohe Frequenzauflösung der Zeit-Frequenz-Transformation erforderlich. Bei praktischen Anwendungsfällen können typische Transformationslängen im Bereich von 20 bis 40 ms auftreten. Werden nun transiente Audiosignalen, d. h. Audiosignale mit Anschlägen, verarbeitet, so verteilt sich je nach zeitlicher Position des Anschlags im Transformationsfenster das Quantisierungsgeräusch zeitlich auch "vor" das Maximum der Signalhüllkurve. Aufgrund der menschlichen Wahrnehmung können diese sogenannten "Vorechos" hörbar werden, wenn sie mehr als 2 ms vor dem eigentlichen Anschlag des zu codierenden Audiosignals einsetzen. Dies ist der Grund, daß bei vielen Transformationscodierern die Transformationslänge der Zeit- Frequenz-Transformation auf kürzere Fenster, d. h. kürzere Blocklängen, mit einer zeitlichen Länge von typischerweise 5 bis 8 ms mit einer damit höheren zeitlichen Auflösung umschaltbar ist. Dies ermöglicht eine zeitlich feinere Formung des Quantisierungsgeräusches und damit eine Unterdrückung dieser Vorechos, wodurch dieselben nicht mehr oder nur sehr wenig hörbar sind, wenn das codierten Signal wieder in einem Decodierer decodiert wird.

Es werden also Vorrichtungen zum Erfassen eines Anschlags in einem Audiosignal verwendet, um die Transformationslänge der Zeit-Frequenz-Transformation gehörrichtig an die Eigenschaften und insbesondere an die transienten Eigenschaften des Audiosignals anzupassen.

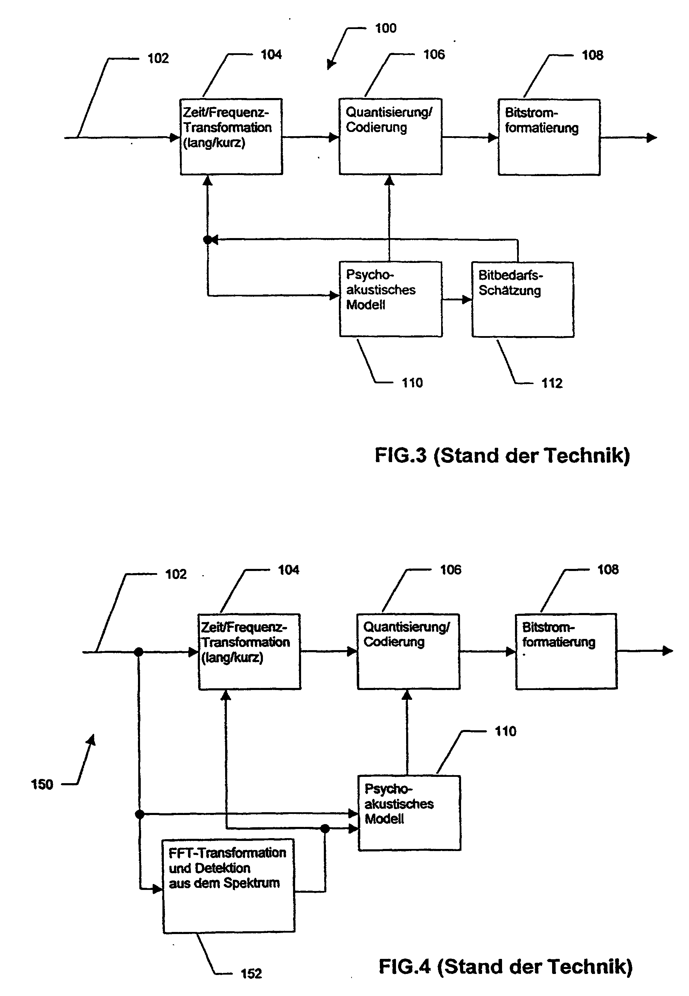

Fig. 3 zeigt einen bekannten Transformationscodierer 100, der allgemein nach dem Standard MPEG 1-2 Layer3 (ISO/IEC IS 11172-3, Coding of Moving Pictures and Associated Audio, Part 3: Audio) aufgebaut ist. Ein Zeitsignal gelangt über einen Eingang 102 in einen Block Zeit/Frequenz-Transformation 104. Das Zeitsignal am Eingang 102, das typischerweise als zeitdiskretes Audiosignal vorliegt, das mittels einer Abtasteinrichtung (nicht gezeigt) aus einem zeitkontinuierlichen Zeitsignal erhalten wurde, wird durch den Block Zeit/ Frequenz-Transformation 104 in aufeinanderfolgende Blöcke von Spektralwerten transformiert, welche in einen Block Quantisierung/Codierung 106 eingegeben werden, wobei das Ausgangssignal des Blocks Quantisierung/Codierung quantisierte und Redundanz-codierte digitale Signale sind, welche in einem Block Bitstromformatierung 108 zusammen mit nötigen Seiteninformationen zu einem Bitstrom gebildet werden, der am Ausgang der Bitstromformatierungseinrichtung 108 anliegt und gespeichert oder übertragen werden kann.

In dem Block Zeit/Frequenz-Transformation 104 findet eine Fensterung des zeitdiskreten Audiosignals am Eingang 102 statt, um aufeinanderfolgende Blöcke mit zeitdiskreten Audiosignalen, welche nun gefenstert sind, zu erzeugen. Die Blöcke der gefensterten zeitdiskreten Audiosignale werden anschließend, wie es bereits erwähnt wurde, in den Frequenzbereich transformiert. Wie es aus der Nachrichtentechnik bekannt ist, ist die Frequenzauflösung der Zeit-Frequenz-Transformation durch die Länge eines Blocks vorgegeben. Um für zeitdiskrete Audiosignale mit Anschlägen, d. h. mit transienten Anteilen, eine ausreichende zeitliche Auflösung zu erreichen, ist es notwendig, daß zur Codierung derselben zur Vermeidung der Vorechos die Fensterlänge und damit die zeitliche Länge eines Blocks zeitdiskreter Abtastwerte verkürzt wird.

Der in Fig. 3 gezeigte bekannte Codierer führt folgendes Verfahren zum Erfassen von Anschlägen in einem Audiosignal durch. Aus dem Block Zeit/Frequenz-Transformation 104 werden die Spektralkomponenten in einen Block psychoakustisches Modell 110 eingespeist, wobei der Block 110 zum einen, wie es bereits eingangs erwähnt wurde, die Maskierungs- oder Mithörschwelle für den Block Quantisierung/Codierung 106 ermittelt, sowie zum anderen aus dem vorliegenden Signalenergieverlauf des zeitdiskreten Audiosignals im Frequenzbereich und dem errechneten Energieverlauf der Mithörschwelle einen Schätzwert für den Bitbedarf zur Codierung des Spektrums ermittelt. Der geschätzte Bitbedarf, der in der Fachwelt auch "Perceptual Entropy" oder kurz "pe" genannt wird, berechnet sich aus folgendem Zusammenhang:

$$pe = \sum_{k=1}^{N} \frac{1}{2} \log_2 \left( \frac{e(k)}{n(k)} + 1 \right) \tag{1}$$

In Gleichung (1) bedeuten N die Anzahl der Spektrallinien eines Blocks, e(k) die Signalenergie der Spektralkomponenten oder Spektrallinien k und n(k) die erlaubte Störenergie der Linie k. Ein Anstieg dieser Perceptual Entropy von einem Transformationsfenster zum nächsten, welcher einen gewissen Schwellenwert, der als "switch_pe" bezeichnet wird, übersteigt, dient hier als Indikator für einen Anschlag. Wird der Schwellenwert switch_pe überschritten, so wird in dem Block 104 von einem langen Fenster zu einem kurzen Fenster umgeschaltet, um zeitlich kürzere Blöcke zeitdiskreter Audiosignale zu erzeugen, um die Zeitauflösung des Transformationscodierers 100 zu erhöhen. Die Berechnungsvorschrift, die in Gleichung (1) dargelegt ist, sowie die Festlegung des Schwellenwerts switch_pe werden in einem Block Bitbedarfsschätzung 112 festgelegt. Das Ergebnis der Bitbedarfsschätzung 112 wird der Zeit/Frequenz-Transformation 104 sowie dem psychoakustischen Modell 110 mitgeteilt, wie es in Fig. 3 angedeutet ist.

Ein Nachteil dieses bekannten Verfahrens besteht darin, daß die Informationen über einen möglichen Anschlag oder "Attack" erst nach der Berechnung des psychoakustischen Modells zur Verfügung stehen. Dies wirkt sich insbesondere nachteilig auf die zeitliche Ablaufstruktur des Codierers aus, da eine Rückkopplung der Fensterinformationen zum psychoakustischen Modell erfolgen muß. Weiterhin wirken sich Änderungen an Parametern zur Berechnung der Mithörschwelle immer auch auf den Wert der Perceptual Entropy aus. Veränderungen dieser Parameter verändern daher immer auch die Fenstersequenz, d. h. die Folge von langen und kurzen Fenstern, der Transformation.

Fig. 4 zeigt einen weiteren bekannten Transformationscodierer 150, der im prinzipiellen Aufbau dem Transformationscodierer 100 ähnelt. Insbesondere umfaßt derselbe ebenfalls den Eingang 102 für zeitdiskrete Audiosignale, welche in dem Block 104 gefenstert und in den Frequenzbereich transformiert werden. In dem Block 106 werden die spektralen Ausgangswerte des Blocks 104 unter Berücksichtigung des psychoakustischen Modells 110 quantisiert und anschließend codiert, um zusammen mit Seiteninformationen durch die Bitstromformatierungseinrichtung 108 in einen ausgangsseitigen Bitstrom geschrieben zu werden.

Der Transformationscodierer 150, der in Fig. 4 gezeigt ist, unterscheidet sich von dem Transformationscodierer 100, der in Fig. 3 gezeigt ist, in der Erfassung von Anschlägen in dem Audiosignal. Die Erfassung von Anschlägen in dem Audiosignal am Eingang 102, die in Fig. 4 dargestellt ist, ist in dem Standard MPEG 2 AAC (siehe ISO/IEC IS 13818-7, Annex B, 2.1, MPEG-2 Advanced Audio coding (AAC)) beschrieben. Der Block FFT-Transformation und Detektion aus dem Spektrum 152 führt eine Erfassung von Anschlägen mittels eines spektralen Energieanstiegs durch. Insbesondere wird das zeitdiskrete Audiosignal am Eingang 102 zuerst mittels einer FFT-Transformation in den Frequenzbereich transformiert, wobei die Länge der FFT- Transformation der Transformationslänge der kurzen Fenster entspricht. Anschließend werden die FFT-Energien in den sogenannten "Critical Bands" berechnet. Die "Critical Bands" stellen eine Frequenzgruppierung dar, die der Auflösung des psychoakustischen Modells entspricht. Ein Schwellwertvergleich der einzelnen Bandenergien über eines oder mehrere zeitlich aufeinanderfolgende Fenster liefert nun ein Indiz für einen Anschlag.

Im Gegensatz zu dem in Fig. 3 dargestellten bekannten Verfahren vermeidet das in Fig. 4 dargestellte bekannte Verfahren den Nachteil der Rückkopplung der Fensterinformationen zum psychoakustischen Modell 110. Das in Fig. 4 dargestellte Verfahren könnte prinzipiell unabhängig vom psychoakustischen Modell vor dessen Berechnung angewendet werden. Das in Fig. 4 dargestellte Verfahren verwendet üblicherweise eine an die Transformationslänge des Codierers angepaßte FFT-Transformation zur Berechnung der Energien in den einzelnen Frequenzgruppen. Außerdem ist, wenn eine Echtzeitimplementierung des Codierers gefordert ist, die extra für die Anschlagsdetektion ausgeführte Fourier-Transformation zu aufwendig bzw. erfordert einen zu großen Rechenaufwand in einem digitalen Signalprozessor (DSP), der an anderer Stelle im Codierer wichtiger wäre, z. B. bei der Quantisierung, der Festerung oder im psychoakustischen Modell.

Die US 5 451 954 A beschreibt eine Quantisierungsrauschenunterdrückung für ein Codierer/Decodierer-System. Hierzu wird aus einem Eingangssignal ein Hilfssignal erzeugt, das entweder hochpaßgefiltert wird, oder das dem Eingangssignal entspricht, d.h. ohne Hochpaßfilterung. Anschließend wird das Hilfssignal in mehrere Unterblöcke geteilt, derart, daß die aneinandergereihten Unterblöcke wieder das Hilfssignal ergeben. Jeder Unterblock ist durch seine Spitzenamplitude charakterisiert. Alternativ kann jeder Unterblock auch durch die Durchschnittsamplitude der zwei größten Abtastwerte in dem Unterblock oder durch die Spitzenleistungspegel charakterisiert sein. Hierauf wird eine Transientenschwelle mit Änderungen der Spitzenamplitude zwischen zwei benachbarten Unterblöcken verglichen. Wird die Schwelle überschritten, d.h. überschreitet das Verhältnis der Spitzenamplitude eines Unterblocks zur Spitzenamplitude des vorausgehenden Unterblocks die Transientenschwelle, so wird bestimmt, daß ein Signaltransientenübergang vorhanden ist. Trifft dies zu, werden Seiteninformationen erzeugt, die einem Decodierer anzeigen, wo Abtastwerte bei der Decodierung unterdrückt werden müssen.

Die Aufgabe der vorliegenden Erfindung besteht darin, ein Verfahren und eine Vorrichtung zum Erfassen eines Anschlags in einem zeitdiskreten Audiosignal sowie ein Verfahren und eine Vorrichtung zum Codieren von Audiosignalen zu schaffen, welche auf effiziente und einfache Art und Weise eine zuverlässige Erfassung von Anschlägen und somit eine einfache Unterdrückung von Vorechos ermöglichen.

Diese Aufgabe wird durch ein Verfahren zum Erfassen eines Anschlags gemäß Anspruch 1, durch eine Vorrichtung zum Erfassen eines Anschlags gemäß Anspruch 11, durch eine Vorrichtung zum Codieren eines zeitdiskreten Audiosignals gemäß Anspruch 14 und durch ein Verfahren zum Codieren eines zeitdiskreten Audiosignals gemäß Anspruch 15 gelöst.

Der vorliegenden Erfindung liegt die Erkenntnis zugrunde, daß ein Anschlag in einem Audiosignal mit einem zeitlichen Anstieg der Signalenergie des Audiosignals einhergeht. Ferner löst ein Anschlag einen Anstieg der Energie von höherfrequenten Signalanteilen in dem Audiosignal aus, da ein Anschlag typischerweise durch schnelle zeitliche Änderungen des Audiosignals gekennzeichnet ist.

Ein Verfahren zum Erfassen eines Anschlags in einem zeitdiskreten Audiosignal umfaßt somit folgende Schritte:

(a) Segmentieren des zeitdiskreten Audiosignals, um aufeinanderfolgende Segmente gleicher Länge mit ungefilterten zeitdiskreten Audiosignalen zu erzeugen;

(b) Filtern des zeitdiskreten Audiosignals in einem aktuellen Segment;

(c) Vergleichen der Energie des gefilterten zeitdiskreten Audiosignals in dem aktuellen Segment mit der Energie des gefilterten zeitdiskreten Audiosignals in einem vorhergehenden Segment; und/oder

(d) Bestimmen eines aktuellen Verhältnisses zwischen der Energie des gefilterten zeitdiskreten Audiosignals in dem aktuellen Segment und der Energie des ungefilterten zeitdiskreten Audiosignals in dem aktuellen Segment und Vergleichen des aktuellen Verhältnisses mit einem entsprechenden vorhergehenden Verhältnis; und

(e) Erfassen eines Anschlags auf der Grundlage des im Schritt (c) und/oder im Schritt (d) durchgeführten Vergleichs.

Bei einem bevorzugten Ausführungsbeispiel wird das Filtern mittels eines Hochpaßfilters ausgeführt, es sind jedoch auch andere Filterungen möglich, z. B. mittels eines Bandpaßfilters, eines Differenzieres erster oder höherer Ordnung oder ähnlichem, solange sich das gefilterte zeitdiskrete Audiosignal hinsichtlich seiner spektralen Eigenschaften von dem ungefilterten zeitdiskreten Audiosignal unterscheidet.

Der in dem Schritt (c) durchgeführte Vergleich dient zum Erfassen eines zeitlichen Anstiegs der Signalenergie, d. h. zur Anstiegsdetektion, während der in dem Schritt (d) durchgeführte Vergleich zur Erfassung des Anstiegs von Signalanteilen eines bestimmten Frequenzbereichs, d. h. zur Spektraldetektion, dient.

Der in dem Schritt (d) durchgeführte Vergleich dient dagegen dazu, frequenzabhängige Effekte der zeitlichen Maskierung zu berücksichtigen. An dieser Stelle sei angemerkt, daß die Zeitauflösung des menschlichen Ohrs frequenzabhängig ist. Die Zeitauflösung ist grob gesprochen bei sehr niedrigen Frequenzen relativ gering und steigt mit zunehmender Frequenz an. Für den Fall eines Vorechos bedeutet dies, daß ein durch die Quantisierung eingeführtes Rauschen, das zu einem Vorecho in einem bestimmten zeitlichen Abstand vor einem Anschlag führt, bei niedrigen Frequenzen eher nicht erfaßt wird, da das Ohr hier eine zeitliche Auflösung hat, die gröber als der bestimmte zeitliche Abstand des Vorechos ist. Anders geartet ist der Fall, wenn ein Anschlag eher im höherfrequenten Bereich stattfindet. Hier ist die Zeitauflösung des menschlichen Ohres feiner, wodurch ein Vorecho in dem bestimmten zeitlichen Abstand hörbar sein kann, da die Zeitauflösung des Ohrs bereits feiner als der zeitliche Abstand des Vorechos vom Anschlag sein kann. Es bleibt also festzustellen, daß die Spektraldetektion im Gegensatz zur Anstiegsdetektion die frequenzabhängige zeitliche Auflösung des Ohrs nachbildet, wodurch eine genauere Anschlagserfassung als mit der Anschlagsdetektion allein möglich ist. In manchen Fällen kann selbstverständlich auch die Anschlagsdetektion alleine bereits zufriedenstellende Ergebnisse liefern.

An dieser Stelle sei angemerkt, daß ein Anschlag entweder auf der Grundlage des in dem Schritt (c) durchgeführten Vergleichs oder auf der Grundlage des in dem Schritt (d) durchgeführten V gleichs oder auf der Grundlage beider Vergleiche erfaßt werden kann.

Bevorzugte Ausführungsbeispiele der vorliegenden Erfindung werden nachfolgend bezugnehmend auf die beiliegenden Zeichnungen detaillierter erläutert. Es zeigen:

Fig. 1     einen Transformationscodierer, der die Anschlagserfassung im Zeitbereich umfaßt;

Fig. 2    eine detailliertere Darstellung der in Fig. 1 enthaltenen Anschlagserfassung im Zeitbereich;

Fig. 3    einen Transformationscodierer, der ein bekanntes Verfahren zur Anschlagserfassung umfaßt; und

Fig. 4    einen weiteren Transformationscodierer, der ein anderes bekanntes Verfahren zur Anschlagserfassung aufweist.

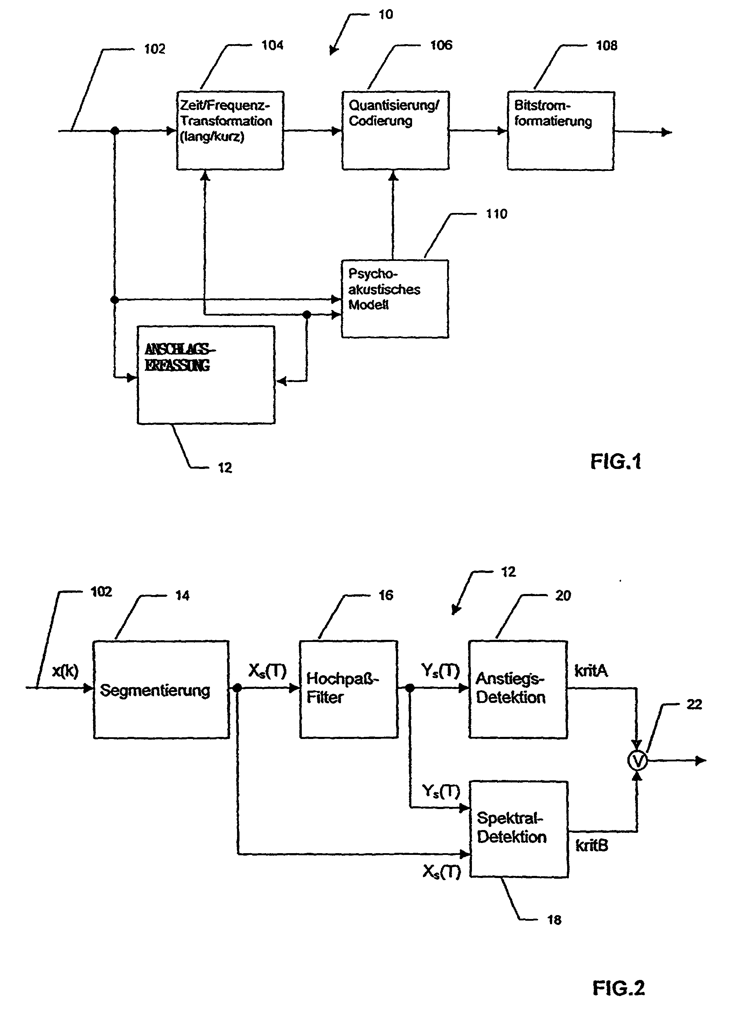

Fig. 1 zeigt einen Transformationscodierer 10 gemäß der vorliegenden Erfindung, welcher sich bis auf einen Block Anschlagserfassung 12 nicht von üblichen in der Technik bekannten Transformationscodierern unterscheidet. Insbesondere sind die Funktionen und Verknüpfungen der Blöcke Zeit/Frequenz-Transformation 104, Quantisierung/Codierung 106, Bitstromformatierung 108 und psychoakustisches Modell 110 in der Technik bekannt. Die Funktionsweisen der einzelnen Blöcke wurden bereits in Verbindung mit den Fig. 3 und 4 beschrieben und werden daher nicht noch einmal explizit erklärt.

Wie es in Fig. 1 gezeigt ist, erhält der Block Anschlagserfassung 12 als Eingangssignal das zeitdiskrete Audiosignal über den Eingang 102 des Transformationscodierers 10. Der Block Anschlagserfassung 12 liefert als Ausgangssignal ein Signal, das anzeigt, ob ein langes oder kurzes Fenster für die Fensterung und anschließende Zeit/Frequenz-Transformation 104 festzulegen ist.

Fig. 2 zeigt eine detaillierte Ansicht des Blocks Anschlagserfassung 12 von Fig. 1. Das zeitdiskrete Audiosignal $x(k)$, das an dem Eingang 102 des Transformationscodierers 10 (Fig. 1) anliegt, wird in eine Segmentierungseinrichtung 14 eingespeist, welche am Ausgang aufeinanderfolgende Segmente der Länge S ausgibt. Ein Segment umfaßt daher die Anzahl S von zeitdiskreten Abtastwerten des Audiosignals und wird als $x_s(T)$ bezeichnet, wobei "T" darstellt, daß es sich beim Signal $x_s(T)$ um das aktuelle Segment handelt, während "T-1" anzeigt, daß es sich um ein dem aktuellen Segment zeitlich unmittelbar vorausgehendes Segment handelt. "T-2" bedeutet analog, daß das Segment mit "T-2" das zweitletzte Segment vor dem aktuellen Segment ist.

Das Signal $x_s(T)$ wird ferner in ein Hochpaßfilter 16 einerseits sowie in eine Spektraldetektionseinrichtung 18 andererseits eingespeist. Das Ausgangssignal $y_s(T)$ des Hochpaßfilters 16 wird wiederum zum einen in eine Anstiegsdetektionseinrichtung 20 einerseits und in die Spektraldetektionseinrichtung 18 andererseits eingespeist. Das Ausgangssignal der Anstiegsdetektionseinrichtung 20 wird ebenso wie das Ausgangssignal der Spektraldetektionseinrichtung 18 einer Anschlagserfassungseinrichtung 22 zugeführt, welche als ODER-Gatter ausgeführt sein kann, wie es durch das Symbol "v" symbolisch in Fig. 2 gezeigt ist. Das Ausgangssignal der Anschlagserfassungsvorrichtung 22 entspricht dem Ausgangssignal der Anschlagserfassungseinrichtung 12 von Fig. 1 und wird dem Block Zeit/Frequenz-Transformation 104 sowie dem Block psychoakustisches Modell 110 zur Verfügung gestellt.

Im Nachfolgenden wird auf die Funktion und den Aufbau der einzelnen in Fig. 2 gezeigten Elemente eingegangen.

Die Segmentierungseinrichtung 14 teilt das Eingangssignal $x(k)$ in aufeinanderfolgende Segmente $x_s(T)$, $x_s(T-1)$, $x_s(T-2)$, ... gleicher Länge S ein. Das zeitdiskrete Audiosignal $x_s(T)$ in einem aktuellen Segment (T) umfaßt somit S zeitdiskrete Abtastwerte des zeitdiskreten Audiosignals $x(k)$ am Eingang 102, wobei die Segmentlänge S unabhängig von der Blocklänge der Zeit/Frequenz-Transformation gewählt werden kann. Insbesondere ist es im Gegensatz zum Stand der Technik nicht erforderlich, als Segmentlänge z. B. die kurze Blocklänge oder die lange Blocklänge zu wählen. Die Segmentlänge S kann im Bereich von 200 bis zu 2000 Abtastwerten liegen, wobei eine Segmentlänge S von etwa 500 Abtastwerten bevorzugt wird.

Das Hochpaßfilter 16 erfüllt im wesentlichen zwei Aufgaben. Die Anstiegsdetektion (Block 20) soll einen Anstieg in der Hüllkurve der Signalenergie detektieren, nicht jedoch dem Amplitudenverlauf eines tieffrequenten Signales folgen.

Liegt nun die Schwingungsdauer eines Signalanteils in der Größenordnung der Segmentlänge oder darüber, würde unter Umständen eine Fehldetektion eines Anschlags erfolgen. Der Frequenzgang des Hochpaßfilters 16 sollte somit vorzugsweise eine genügende Sperrdämpfung im unteren Frequenzbereich besitzen. Mit zunehmender Sequenzlänge S kann zudem die Grenzfrequenz des Filters weiter verringert werden. Andererseits werden die Energien des hochpaßgefilterten Zeitsignals $y_s(T)$ weiterhin als Vergleichsmaß für die Spektraldetektion (Block 18) benötigt.

Bezüglich der Flankensteilheit und Welligkeit im Durchlaßbereich kann das Filter sehr mäßige Eigenschaften aufweisen, wobei jedoch ein lineares Phasenverhalten bevorzugt wird. Bei einer bevorzugten Segmentlänge von etwa 500 Abtastwerten wird bei einem bevorzugten Ausführungsbeispiel der vorliegenden Erfindung ein nicht rekursives, linearphasiges FIR-Filter der Länge 7 mit den Filterkoeffizienten -0,2136, -0,0257, -0,0265, -0,5713, -0,0265, -0,0257, -0,2136 verwendet werden. Die Länge des FIR-Filters des bevorzugten Ausführungsbeispiel ist jedoch nicht auf den genannten Wert eingeschränkt. Für manche Fälle dürften auch Filter mit geringerer Länge ausreichen, während in wieder anderen Fällen deutlich mehr Filterkoeffizienten erwünscht sein könnten.

Weiterhin wird bevorzugt, daß die Filterlänge klein gegenüber der Segmentlänge S ist. In diesem Fall kann nämlich die Filterlaufzeit vernachlässigt werden, wodurch eine weitere Komplexität des Transformationscodierers 10 vermieden werden kann.

Die Segmente werden durch ein nicht rekursives, digitales Filter, wie es bereits erwähnt wurde, mit einer sehr kurzen Filterlänge im Vergleich zur Segmentlänge von tieffrequenten Anteilen befreit. Für die Ausgangsfolge des Filters $y_s(T)$ ergibt sich folgende Gleichung:

$$y_s(T) = x_s(T) * h(k) \qquad (2)$$

h(k) stellt in Gl. (2) die Impulsantwort des Filters dar, während k der Filterlänge entspricht. Das Ausgangssignal $y_s(T)$ entsteht also aus der Faltung des Eingangssignals $x_s(T)$ mit der Impulsantwort h(k) des Hochpaßfilters 16.

In der Anstiegsdetektionseinrichtung 20 wird zunächst aus den gefilterten Eingangsdaten $y_s(T)$ über ein Skalarprodukt die Energie Ef(T) des gerade vorliegenden Segmentes, das auch als aktuelles Segment bezeichnet wird, berechnet. Ein Vergleich mit der Energie $E_f(T-1)$ des dem aktuellen Segment vorausgehenden Segments sowie mit der Energie Ef(T-2) des zweitletzten vorausgehenden Segments liefert nun das Kriterium für den Energieanstieg in dem zeitdiskreten Audiosignal von einem Segment zum nächsten. Der Ausdruck für das erste Kriterium oder kritA lautet somit folgendermaßen:

$$kritA = [E_f(T) > k_1 \cdot E_f(T\text{-}1)] \wedge [E_f(T) > k_2 \cdot E_f(T\text{-}2)] \wedge [E_f(T) > E_{minF}] \qquad (3)$$

Entsprechend der üblichen Notation bedeutet "∨" eine logische ODER-Verknüpfung während "∧" eine logische UND-Verknüpfung bezeichnet. Der letzte Term der Gleichung 3 bezeichnet einen Vergleich der aktuellen Energie des hochpaßgefilterten, zeitdiskreten Audiosignals in dem aktuellen Segment mit einer Filter-Mindestenergie $E_{minF}$. Dieser Vergleich bewirkt, daß das Kriterium A nur berücksichtigt wird, wenn die aktuelle segmentenergie eine Mindestenergie überschreitet. Der Wert der Konstanten $E_{minF}$ kann vorher festgelegt werden und basiert in vereinfachter Form auf dem Einfluß der Ruhehörschwelle auf die Wahrnehmung. Die Mindestenergie für den konstanten Wert $E_{minF}$ kann daher vorzugsweise im Bereich von -80 dBFs liegen.

Die in dem Block 18 ausgeführte Spektraldetektion basiert dagegen auf einem Vergleich von gefilterten und ungefilterten Segmentenergien des aktuellen Segments mit gefilterten und ungefilterten Segmentenergien des vorhergehenden Segments. In Gleichungsform ausgedrückt ergibt sich folgende Vorschrift für das zweite Kriterium kritB:

$$kritB = [\frac{E_f(T)}{E_u(T)} > k_3 \cdot \frac{E_f(T\text{-}1)}{E_u(T\text{-}1)}] \wedge [E_u(T) > E_{minU}] \qquad (4)$$

In dieser Gleichung stellt $E_u(T)$ die Energie des aktuellen ungefilterten Segments dar, während $E_f(T)$ die Energie des hochpaßgefilterten aktuellen Segments, d. h. die Energie des hochpaßgefilterten zeitdiskreten Audiosignals im aktuellen Segment, darstellt. Der letzte Term der Gleichung (4) berücksichtigt wieder den Fall, daß keine Fensterumschaltung ausgelöst wird, wenn die Energie des ungefilterten zeitdiskreten Audiosignals im aktuellen Segment unter einer Minimalenergie $E_{minU}$ für ungefilterte Signale liegt, welche wiederum auf der Ruhehörschwelle basiert und ebenso wie die Filter-Minimalenergie $E_{minF}$ einen Wert von -80 dBFs annehmen kann.

In den Gleichungen (3) und (4) sind ferner verschiedene Konstanten $k_1$ bis $k_3$ genannt. Mittels dieser Konstanten wird festgelegt, wieviel größer die Energie des aktuellen Segments bzw. das aktuelle Verhältnis zwischen gefilterter Energie und ungefilterter Energie im Vergleich zu dem entsprechenden Wert des vorausgehenden Segments sein muß, damit ein Anschlag erfaßt wird, durch den eine Fensterumschaltung von langen zu kurzen Fenstern bewirkt wird.

In der Praxis haben sich Werte für die Konstanten $k_1$ und $k_3$ von vier als günstig erwiesen, welche damit einem entsprechenden Pegelunterschied von 6 dB entsprechen. Lediglich vorzugsweise kann die Konstante $k_2$, also der Vergleichswert mit der vorletzten Segmentenergie, auch etwas kleiner als vier gewählt werden, um beispielsweise einen Wert von drei anzunehmen. Es wir jedoch darauf hingewiesen, daß die Werte für die Konstanten $k_1$ bis $k_3$ abweichend von den genannten Werten eingestellt werden können, wenn eine feinere bzw. gröbere Anschlagserfassung gewünscht wird. Für eine korrekte Funktionsweise der Anschlagserfassung der vorliegenden Erfindung ist es jedoch erforderlich, daß die Werte der Konstanten $k_1$ bis $k_3$ größer als eins eingestellt werden, wie es aus den Gleichungen (3) und (4) ersichtlich ist.

An dieser Stelle sei angemerkt, daß das Kriterium A (kritA) und das Kriterium B (kritB) lediglich auf dem jeweils ersten Term der Gleichung (3) und (4) basieren können. Die weiteren beiden Terme in der Gleichung (3) sowie der weitere Term in der Gleichung (4) dienen lediglich einer ausgefeilteren Anschlagserfassung, um sicherzustellen, daß möglichst wenig Anschläge erfaßt werden, um möglichst selten zu den kurzen Transformationsfenstern umschalten zu müssen.

Um den Einfluß von Schwebungen auf die Anstiegsdetektion zu minimieren, ist der Vergleich der gefilterten Energien nicht nur mit der zeitlich vorhergehenden Segmentenergie $E_f(T-1)$ sondern zusätzlich mit dem vorletzten Energiewert $Ef(T-2)$ bei der gewählten Segmentlänge wünschenswert. Hier wird der Effekt der zeitlichen Nachverdekkung bei kurz aufeinanderfolgenden Anschlägen berücksichtigt, wenn ein potentielles Vorecho vor einem zweiten Anschlag noch vom ersten Anschlag maskiert wird. Der zweite Term in Gleichung (3) stellt für die Funktion der vorliegenden Erfindung keinen wesentlich Term dar, sondern lediglich eine vorteilhafte Ausgestaltung. Dasselbe trifft für die jeweils letzten Terme der Gleichungen (3) und (4) zu, welche das Erfassen eines Anschlags von Mindestenergien abhängig machen, die der Ruheschwelle nachempfunden werden.

An dieser Stelle sei noch einmal betont, daß die Verwendung des Hochpaßfilters lediglich beispielhaft wenn auch bevorzugt ist. Anstelle des Hochpaßfilters könnte genausogut ein Differenzierer eingesetzt werden, der allgemein ausgedrückt dazu führt, daß im differenzierten Signal höherfrequente Signalanteile stärker zutage treten als im nicht-differenzierten Signal. Eine weitere Alternative für das Hochpaßfilter wäre ein Bandpaßfilter, das dazu führt, daß die Energie des bandpaßgefilterten Signals in einem bestimmten Spektralbereich konzentriert ist. Diese Aufzählung der Alternativen für das Hochpaßfilter des bevorzugten Ausführungsbeispiels ist jedoch nicht erschöpfend. Voraussetzung für das Verfahren der vorliegenden Erfindung ist, daß das Signal im Zeitbereich verarbeitet, d. h. gefiltert wird, und zwar derart, daß es sich hinsichtlich seiner spektralen Eigenschaften von dem nicht verarbeiteten, d. h. ungefilterten Signal unterscheidet. Der Ausdruck "Filtern" ist daher nicht derart begrenzend aufzufassen, daß der lediglich eine übliche Filterung z. B. mittels eines Hochpasses umfaßt, sondern daß er auch andere Verarbeitungen, wie z. B. Differenzierungen, umfaßt, die dazu führen, daß sich das verarbeitete Signal hinsichtlich seiner spektralen Eigenschaften von dem nicht verarbeiteten unterscheidet.

Weiterhin sei darauf hingewiesen, daß die Einrichtung 22 zum Erfassen eines Anschlags nicht unbedingt als ODER-Gatter ausgeführt sein muß. Dieselbe kann z. B. als UND-Gatter ausgeführt sein. In diesem Fall wird nur dann ein Anschlag erfaßt, wenn beide Kriterien erfüllt sind. In diesem Fall würden vorzugsweise die Konstanten $k_1$, $k_2$ und/oder $k_3$ und/oder die Mindestenergien verkleinert werden, was dazu führt, daß jedes Kriterien für sich einfacher erfüllt wird. Um jedoch keine unnötigen oder zu häufigen Umschaltungen auf kürzere Fenster zu bewirken, wird dann ein Anschlag nur erfaßt, wenn beide Kriterien in einem Segment gleichzeitig erfaßt werden.

Die vorliegende Erfindung schafft somit eine Detektion von Anschlägen in Audiosignalen aus der Zeitsignalfolge, welche ausschließlich im Zeitbereich stattfindet. Die Anschlagserfassung bietet daher gegenüber dem Stand der Technik den Vorteil, daß keine FFT mit einer vorbestimmten Transformationslänge benötigt wird. Das Verfahren der vorliegenden Erfindung kann somit äußerst sparsam im Hinblick auf die verfügbaren Rechnerressourcen implementiert werden, da das verwendete FIR-Filter einfach zu realisieren ist.

## Patentansprüche

1. Verfahren zum Erfassen eines transienten Bereichs in einem zeitdiskreten Audiosignal (x(k)), mit folgenden Schritten:

   (a) Segmentieren des zeitdiskreten Audiosignals, um aufeinanderfolgende Segmente gleicher Länge mit ungefilterten zeitdiskreten Audiosignalen ($x_s(T)$, $x_s(T-1)$, $x_s(T-2)$, ...) zu erzeugen;

   (b) Filtern des zeitdiskreten Audiosignals ($x_s(T)$) in einem aktuellen Segment, um ein gefiltertes zeitdiskretes Audiosignal zu erhalten, bei dem niederfrequente Spektralanteile gedämpft sind;

   (c) Vergleichen der Energie ($E_f(T)$) des gefilterten zeitdiskreten Audiosignals ($y_s(T)$) in dem aktuellen Segment mit der Energie ($E_f(T-1)$) des gefilterten zeitdiskreten Audiosignals ($y_s(T-1)$)in einem vorhergehenden Segment; und/oder

   (d) Bestimmen eines aktuellen Verhältnisses zwischen der Energie ($E_f(T)$) des gefilterten zeitdiskreten Audiosignals ($y_s(T)$) in dem aktuellen Segment und der Energie ($E_u(T)$) des ungefilterten zeitdiskreten Audiosignals ($x_s(T)$) in dem aktuellen Segment und Vergleichen des aktuellen Verhältnisses mit einem entsprechenden vorhergehenden Verhältnis; und

   (e) Erfassen eines transienten Bereichs auf der Grundlage des im Schritt (c) und/oder (d) durchgeführten Vergleichs;

**2.** Verfahren nach Anspruch 1, bei dem der Schritt des Filtern ein Hochpaßfiltern des zeitdiskreten Audiosignals umfaßt.

**3.** Verfahren nach Anspruch 1 oder 2, bei dem im Schritt (e) ein transienter Bereich erfaßt wird, wenn der in dem Schritt (c) durchgeführte Vergleich ergibt, daß die Energie ($E_f(T)$) des gefilterten zeitdiskreten Audiosignals ($y_s(T)$) in dem aktuellen Segment größer als die Energie ($E_f(T-1)$) des gefilterten zeitdiskreten Audiosignals ($y_s(T-1)$) in einem vorhergehenden Segment ist.

**4.** Verfahren nach Anspruch 1 oder 2,

bei dem in Schritt (c) ferner die Energie ($Ef(T)$) des gefilterten zeitdiskreten Audiosignals ($y_s(T)$) in dem aktuellen Segment mit der Energie ($E_f(T-2)$) eines gefilterten zeitdiskreten Audiosignals ($y_s(T-2)$) in einem zweitletzten vorhergehenden Segment verglichen wird, und

bei dem im Schritt (e) nur dann ein transienter Bereich erfaßt wird, wenn die Energie ($Ef(T)$) des gefilterten zeitdiskreten Audiosignals ($y_s(T)$) in dem aktuellen Segment sowohl größer als die Energie ($E_f(T-1)$) des gefilterten zeitdiskreten Audiosignals ($y_s(T-1)$) in dem vorhergehenden Segment als auch größer als die Energie ($E_f(T-2)$) des zeitdiskreten Audiosignals ($y_s(T-2)$) in dem zweitletzten vorhergehenden Segment ist.

**5.** Verfahren nach Anspruch 1 oder 2,

bei dem im Schritt (c) ferner die Energie des gefilterten zeitdiskreten Audiosignals im aktuellen Segment mit einem vorbestimmten Filterminimalwert ($E_{minF}$), der auf der psychoakustischen Ruhehörschwelle basiert, verglichen wird, und

bei dem im Schritt (e) nur dann ein transienter Bereich erfaßt wird, wenn die Energie des gefilterten zeitdiskreten Audiosignals in dem aktuellen Segment sowohl größer als die Energie des gefilterten zeitdiskreten Audiosignals in dem vorhergehenden Segment als auch größer als die Energie des gefilterten zeitdiskreten Audiosignals in dem zweitletzten vorhergehenden Segment als auch größer als der vorbestimmte Filter-Minimalwert ($E_{minF}$) ist.

**6.** Verfahren nach einem der vorhergehenden Ansprüche, bei dem die Energien, die jeweils mit der Energie des gefilterten zeitdiskreten Audiosignals im aktuellen Segment verglichen werden, mit Faktoren ($k_1$, $k_2$) gewichtet werden, die größer als eins sind.

**7.** Verfahren nach einem der vorhergehenden Ansprüche, bei dem im Schritt (e) ein transienter Bereich erfaßt wird, wenn der in dem Schritt (d) durchgeführte Vergleich ergibt, daß das aktuelle Verhältnis größer als das vorhergehende entsprechende Verhältnis ist.

**8.** Verfahren nach einem der Ansprüche 1 bis 6,

bei dem in dem Schritt (e) ferner die Energie ($E_u(T)$) des ungefilterten zeitdiskreten Audiosignals ($x_s(T)$) in dem aktuellen Segment mit einem vorbestimmten Minimalwert ($E_{minU}$), der auf der psychoakustischen Ruhehörschwelle basiert, verglichen wird, und

bei dem im Schritt (e) nur dann ein transienter Bereich erfaßt wird, wenn sowohl das aktuelle Verhältnis größer als das entsprechende vorherige Verhältnis ist, als auch die Energie ($E_u(T)$) des ungefilterten zeitdiskreten Audiosignals ($x_s(T)$) in dem aktuellen Segment größer als der vorbestimmte Minimalwert ($E_{minU}$) ist.

**9.** Verfahren nach Anspruch 7 oder 8, bei dem das vorhergehende Verhältnis mit einem vorbestimmten Faktor ($k_3$), der größer als eins ist, gewichtet wird.

**10.** Verfahren nach einem der vorhergehenden Ansprüche, bei dem das Hochpaßfiltern mittels eines FIR-Filters durchgeführt wird.

**11.** Vorrichtung (12) zum Erfassen eines transienten Bereichs in einem zeitdiskreten Audiosignal ($x(k)$) mit folgenden Merkmalen:

(a) einer Einrichtung (14) zum Segmentieren des zeitdiskreten Audiosignals (x(k)), um aufeinanderfolgende Segmente mit gleicher Länge mit ungefilterten zeitdiskreten Audiosignalen ($x_s(T)$, $x_s(T-1)$, $x_s(T-2)$, ...) zu erzeugen;

(b) einem Filter (16) zum Filtern des zeitdiskreten Audiosignals ($x_s(T)$) in einem aktuellen Segment, um ein gefiltertes zeitdiskretes Audiosignal zu erhalten, bei dem niederfrequente Spektralanteile gedämpft sind;

(c) einer Anstiegserfassungseinrichtung (20) zum Vergleichen der Energie (Ef(T)) des gefilterten zeitdiskreten Audiosignals ($y_s(T)$) in dem aktuellen Segment mit der Energie ($E_f(T-1)$) des gefilterten zeitdiskreten Audiosignals ($y_s(T-1)$) in einem vorhergehenden segment; und/oder

(d) einer spektralerfassungseinrichtung (18) zum Bestimmen eines aktuellen Verhältnisses zwischen der Energie ($E_f(T)$) des gefilterten zeitdiskreten Audiosignals ($y_s(T)$) in dem aktuellen Segment und der Energie ($E_u(T)$) des ungefilterten zeitdiskreten Audiosignals ($x_s(T)$) in dem aktuellen Segment und Vergleichen des aktuellen Verhältnisses mit einem vorhergehenden entsprechenden Verhältnis; und

(e) einer Einrichtung (22) zum Erfassen eines transienten Bereichs auf der Grundlage des durch die Anstiegserfassungseinrichtung (20) und/oder des durch die Spektralerfassungseinrichtung (18) durchgeführten Vergleichs.

12. Vorrichtung (12) nach Anspruch 11, bei dem das Filter (16) ein Hochpaß-FIR-Filter mit linearem Phasenverhalten ist.

13. Vorrichtung nach Anspruch 11 oder 12, bei dem die Einrichtung (22) zum Erfassen eines transienten Bereichs als UND- oder als ODER-Gatter ausgeführt ist, wobei in Eingänge des ODER-Gatters bzw. UND-Gatters Ausgangssignale (kritA, kritB) der Anstiegserfassungseinrichtung (20) und der Spektralerfassungseinrichtung (18) eingespeist werden.

14. Vorrichtung (10) zum Codieren eines zeitdiskreten Audiosignals, mit folgenden Merkmalen:

(a) einer Transientenerfassungseinrichtung (12) zum Erfassen eines transienten Bereichs in dem zeitdiskreten Audiosignal nach einem der Ansprüche 10 bis 12;

(b) einer Einrichtung (104) zum Fenstern des zeitdiskreten Audiosignals, um Blöcke von zeitdiskreten Audiosignalen zu erzeugen, die auf die Transientenerfassungseinrichtung (12) anspricht, um ein kurzes Fenster zum Fenstern zu verwenden, wenn die Transientenerfassungseinrichtung (12) einen transienten Bereich erfaßt;

(c) einer Einrichtung (104) zum Zeit/Frequenz-Transformieren der Blöcke des zeitdiskreten Audiosignals, um Blöcke von Spektralkomponenten zu erzeugen; und

(d) einer Einrichtung (106) zum Quantisieren und Codieren der Blöcke von Spektralkomponenten.

15. Verfahren zum Codieren eines zeitdiskreten Audiosignals mit folgenden schritten:

(a) Erfassen eines transienten Bereichs nach einem der Ansprüche 1 bis 9;

(b) Fenstern des zeitdiskreten Audiosignals mit einem kurzen Fenster, wenn ein transienter Bereich erfaßt wurde, und mit einem langen Fester, wenn kein transienter Bereich erfaßt wurde, um Blöcke von zeitdiskreten Audiosignalen zu erzeugen;

(c) Transformieren der Blöcke des zeitdiskreten Audiosignals von dem Zeit- in den Frequenzbereich, um Blöcke mit Spektralkomponenten zu erzeugen; und

(d) Quantisieren und Codieren der Blöcke von Spektralkomponenten, um ein codiertes Audiosignal zu erhalten.

**Claims**

1. A method for detecting a transient in a discrete-time audio signal $(x(k))$, comprising the following steps:

   (a) segmenting the discrete-time audio signal so as to generate consecutive segments of the same length with unfiltered discrete-time audio signals $(x_s(T), x_s(T-1), x_s(T-2), ...)$;

   (b) filtering the discrete-time audio signal $(x_s(T))$ in a current segment;

   (c) comparing the energy $(Ef(T))$ of the filtered discrete-time audio signal $(y_s(T))$ in the current segment with the energy $(E_f(T-1))$ of the filtered discrete-time audio signal $(y_s(T-1))$ in a preceding segment; and/or

   (d) determining a current relationship between the energy $(Ef(T))$ of the filtered discrete-time audio signal $(y_s(T))$ in the current segment and the energy $(E_u(T))$ of the unfiltered discrete-time audio signal $(x_s(T))$ in the current segment and comparing the current relationship with a corresponding preceding relationship; and

   (e) detecting a transient on the basis of the comparison performed in step (c) and/or (d).

2. A method according to claim 1, wherein the step of filtering comprises a high-pass filtering of the discrete-time audio signal.

3. A method according to claim 1 or 2, wherein in step (e) a transient is detected if the comparison performed in step (c) shows that the energy $(Ef(T))$ of the filtered discrete-time audio signal $(y_s(T))$ in the current segment is greater than the energy $(E_f(T-1))$ of the filtered discrete-time audio signal $(y_s(T-1))$ in a preceding segment.

4. A method according to claim 1 or 2,

   wherein in step (c) in addition the energy $(E_f(T))$ of the filtered discrete-time audio signal $(y_s(T))$ in the current segment is compared with the energy $(E_f(T-2))$ of a filtered discrete-time audio signal $(y_s(T-2))$ in a next to last preceding segment, and

   wherein in step (e) a transient is only detected if the energy $(Ef(T))$ of the filtered discrete-time audio signal $(y_s(T))$ in the current segment is greater than the energy $(E_f(T-1))$ of the filtered discrete-time audio signal $(y_s(T-1))$ in the preceding segment and is also greater than the energy $(E_f(T-2))$ of the filtered discrete-time audio signal $(y_s(T-2))$ in the next to last preceding segment.

5. A method according to claim 1 or 2,

   wherein in step (c) in addition the energy of the filtered discrete-time audio signal in the current segment is compared with a predetermined filter minimum value $(E_{minF})$ which is based on the psychoacoustic quiescent hearing threshold, and

   wherein in step (e) a transient is only detected if the energy of the filtered discrete-time audio signal in the current segment is greater than the energy of the filtered discrete-time audio signal in the preceding segment and is also greater than the energy of the filtered discrete-time audio signal in the next to last preceding segment and is also greater than the predetermined filter minimum value $(E_{minF})$.

6. A method according to one of the preceding claims, wherein the energies which are respectively compared with the energy of the filtered discrete-time audio signal in the current segment are weighted with factors $(k_1, k_2)$ which are greater than one.

7. A method according to one of the preceding claims, wherein in step (e) a transient is detected if the comparison performed in step (d) shows that the current relationship is greater than the preceding corresponding relationship.

8. A method according to one of the claims 1 to 6,

   wherein in step (e) in addition the energy $(E_u(T))$ of the unfiltered discrete-time audio signal $(x_s(T))$ in the current segment is compared with a predetermined minimum value $(E_{minU})$ which is based on the psychoacoustic quiescent hearing threshold, and

wherein in step (e) a transient is only detected if the current relationship is greater than the corresponding preceding relationship and if the energy ($E_u(T)$) of the unfiltered discrete-time audio signal ($x_s(T)$) in the current segment is greater than the predetermined minimum value ($E_{minU}$).

**9.** A method according to claim 7 or 8, wherein the preceding relationship is weighted with a predetermined factor ($k_3$) which is greater than one.

**10.** A method according to one of the preceding claims, wherein the high-pass filtering is performed by means of an FIR filter.

**11.** A device (12) for detecting a transient in a discrete-time audio signal ($x(k)$), comprising the following features:

(a) means (14) for segmenting the discrete-time audio signal ($x(k)$) so as to generate consecutive segments of the same length with unfiltered discrete-time audio signals ($x_s(T)$, $x_s(T-1)$, $x_s(T-2)$, ...);

(b) a filter (16) for filtering the discrete-time audio signal ($x_s(T)$) in a current segment;

(c) a rise detector (20) for comparing the energy ($Ef(T)$) of the filtered discrete-time audio signal ($y_s(T)$) in the current segment with the energy ($E_f(T-1)$) of the filtered discrete-time audio signal ($y_s(T-1)$) in a preceding segment; and/or

(d) a spectral detector (18) for determining a current relationship between the energy ($Ef(T)$) of the filtered discrete-time audio signal ($y_s(T)$) in the current segment and the energy ($E_u(T)$) of the unfiltered discrete-time audio signal ($x_s(T)$) in the current segment and comparing the current relationship with a preceding corresponding relationship; and

(e) means (22) for detecting a transient on the basis of the comparison performed by the rise detector (20) and/or by the spectral detector (18).

**12.** A device (12) according to claim 11, wherein the filter (16) is a high-pass FIR filter with linear phase behaviour.

**13.** A device according to claim 11 or 12, wherein the means (22) for detecting a transient is implemented as an AND gate or an OR gate and output signals (kritA, krit B) of the rise detector (20) and of the spectral detector (18) are fed into inputs of the OR gate or the AND gate.

**14.** A device (10) for coding a discrete-time audio signal, comprising the following features:

(a) a transient detector (12) for detecting a transient in the discrete-time audio signal according to one of the claims 10 to 12;

(b) means (104) for windowing the discrete-time audio signal so as to generate blocks of discrete-time audio signals which responds to the transient detector (12) so as to use a short window for windowing when the transient detector (12) detects a transient;

(c) means (104) for time/frequency transforming the blocks of the discrete-time audio signal so as to generate blocks of spectral components; and

(d) means (106) for quantizing and coding the blocks of spectral components.

**15.** A method for coding a discrete-time audio signal, comprising the following steps:

(a) detecting a transient according to one of the claims 1 to 9;

(b) windowing the discrete-time audio signal with a short window when a transient has been detected and with a long window when no transient has been detected so as to generate blocks of discrete-time audio signals;

(c) transforming the blocks of the discrete-time audio signal from the time domain into the frequency domain so as to generate blocks with spectral components; and

(d) quantizing and coding the blocks of spectral components so as to obtain a coded audio signal.

**Revendications**

1.  Procédé de détection d'une zone transitoire dans un signal audio discret dans le temps (x(k)), aux étapes suivantes consistant à :

    (a) segmenter le signal audio discret dans le temps, pour générer des segments successifs de même longueur à signaux audio discrets dans le temps non filtrés ($x_s(T)$, $x_s(T-1)$, $x_s(T-2)$, ...) ;
    (b) filtrer le signal audio discret dans le temps dans un segment actuel, pour obtenir un signal audio discret dans le temps filtré dans lequel les parties spectrales basse fréquence sont atténuées ;
    (c) comparer l'énergie ($E_f(T)$) du signal audio discret dans le temps filtré ($y_s(T)$) dans le segment actuel avec l'énergie ($E_f(T-1)$) du signal audio discret dans le temps filtré ($y_s(T-1)$) dans un segment précédent ; et/ou
    (d) déterminer un rapport actuel entre l'énergie ($E_f(T)$) du signal audio discret dans le temps filtré ($y_s(T)$) dans le segment actuel et l'énergie ($E_u(T)$) du signal audio discret dans le temps non filtré ($x_s(T)$) dans le segment actuel et comparer le rapport actuel avec un rapport correspondant précédent; et
    (e) détecter une zone transitoire sur base de la comparaison effectuée à l'étape (c) et/ou (d).

2.  Procédé suivant la revendication 1, dans lequel l'étape de filtration comporte la filtration passe-haut du signal audio discret dans le temps.

3.  Procédé suivant la revendication 1 ou 2, dans lequel est détectée, à l'étape (e), une zone transitoire lorsqu'il résulte de la comparaison effectuée à l'étape (c) que l'énergie ($E_f(T)$) du signal audio discret dans le temps filtré ($y_s(T)$) dans le segment actuel est plus grande que l'énergie ($E_f(T-1)$) du signal audio discret dans le temps filtré ($y_s(T-1)$) dans un segment précédent.

4.  Procédé suivant la revendication 1 ou 2,

    dans lequel, à l'étape (c), il est, par ailleurs, comparé l'énergie ($E_f(T)$) du signal audio discret dans le temps filtré ($y_s(T)$) dans le segment actuel avec l'énergie ($E_f(T-2)$) d'un signal audio discret dans le temps filtré ($y_s(T-2)$) dans un pénultième segment précédent, et
    dans lequel, à l'étape (e), une zone transitoire n'est détectée que lorsque l'énergie ($E_f(T)$) du signal audio discret dans le temps filtré ($y_s(T)$) dans le segment actuel est tant supérieure à l'énergie ($E_f(T-1)$) du signal audio discret dans le temps filtré ($y_s(T-1)$) dans le segment précédent que supérieure à l'énergie ($E_f(T-2)$) du signal audio discret dans le temps filtré ($y_s(T-2)$) dans le pénultième segment précédent.

5.  Procédé suivant la revendication 1 à 2,

    dans lequel, à l'étape (c), il est, par ailleurs, comparé l'énergie du signal audio discret dans le temps filtré dans le segment actuel avec une valeur minimale de filtre prédéterminée ($E_{minF}$) basée sur le seuil d'écoute au repos, et
    dans lequel, à l'étape (e), une zone transitoire n'est détectée que lorsque l'énergie du signal audio discret dans le temps filtré dans le segment actuel est tant supérieure à l'énergie du signal audio discret dans le temps filtré dans le segment précédent que supérieure à l'énergie du signal audio discret dans le temps filtré dans le pénultième segment précédent que supérieure à la valeur minimale de filtre prédéterminée ($E_{minF}$).

6.  Procédé suivant l'une des revendications précédentes, dans lequel chacune des énergies comparées à l'énergie du signal audio discret dans le temps filtré dans le segment actuel est pondérée par des facteurs ($k_1$, $k_2$) supérieurs à un.

7.  Procédé suivant l'une des revendications précédentes, dans lequel, à l'étape (e), une zone transitoire est détectée lorsqu'il résulte de la comparaison effectuée à l'étape (d) que le rapport actuel est supérieur au rapport correspondant précédent.

**8.** Procédé suivant l'une des revendications 1 à 6,

dans lequel, à l'étape (e), l'énergie ($E_u(T)$) du signal audio discret dans le temps non filtré ($x_s(T)$) dans le segment actuel est comparée avec une valeur minimale prédéterminée ($E_{minU}$) basée sur le seuil d'écoute psychoacoustique au repos, et
dans lequel, à l'étape (e), une zone transitoire n'est détectée que lorsque tant le rapport actuel est supérieur au rapport correspondant précédent que l'énergie ($E_u(T)$) du signal audio discret dans le temps non filtré ($x_s(T)$) dans le segment actuel est supérieure à la valeur minimale prédéterminée ($E_{minU}$).

**9.** Procédé suivant la revendication 7 ou 8, dans lequel le rapport précédent est pondéré par un facteur prédéterminé ($k_3$) supérieur à un.

**10.** Procédé suivant l'une des revendications précédentes, dans lequel la filtration passe-haut est effectuée à l'aide d'un filtre FIR.

**11.** Dispositif (12) de détection d'une zone transitoire dans un signal audio discret dans le temps ($x(k)$), aux caractéristiques suivantes :

(a) un dispositif (14) destiné à segmenter le signal audio discret dans le temps ($x(k)$), pour générer des segments successifs de même longueur à signaux audio discrets dans le temps non filtrés ($x_s(T)$, $x_s(T-1)$, $x_s(T-2)$, ...) ;
(b) un filtre (16) destiné à filtrer le signal audio discret dans le temps ($x_s(T)$) dans un segment actuel, pour obtenir un signal audio discret dans le temps filtré dans lequel les parties spectrales basse fréquence sont atténuées ;
(c) un dispositif de détection de montée (20) destiné à comparer l'énergie ($E_f(T)$) du signal audio discret dans le temps filtré ($y_s(T)$) dans le segment actuel avec l'énergie ($E_f(T-1)$) du signal audio discret dans le temps filtré ($y_s(T-1)$) dans un segment précédent ; et/ou
(d) un dispositif de détection spectrale (18) destiné à déterminer un rapport actuel entre l'énergie ($E_f(T)$) du signal audio discret dans le temps filtré ($y_s(T)$) dans le segment actuel et l'énergie ($E_u(T)$) du signal audio discret dans le temps non filtré ($x_s(T)$) dans le segment actuel et comparer le rapport actuel avec un rapport correspondant précédent; et
(e) un dispositif (22) destiné à détecter une zone transitoire sur base de la comparaison effectuée par le dispositif de détection de montée (20) et/ou par le dispositif de détection spectrale (18).

**12.** Dispositif (12) suivant la revendication 11, dans lequel le filtre (16) est un filtre FIR passe-haut à comportement de phase linéaire.

**13.** Dispositif suivant la revendication 11 ou 12, dans lequel le dispositif (22) destiné à détecter une zone transitoire est réalisé sous forme de porte de déclenchement OU ou ET, vers les entrées de la porte de déclenchement OU ou de la porte de déclenchement ET étant amenés des signaux de sortie (kritA, kritB) du dispositif de détection de montée (20) et du dispositif de détection spectrale (18).

**14.** Dispositif (10) de codage d'un signal audio discret dans le temps, aux caractéristiques suivantes :

(a) un dispositif de détection de transitoires (12) destiné à détecter une zone transitoire dans le signal audio discret dans le temps suivant l'une des revendications 10 à 12 ;
(b) un dispositif (104) destiné à la division en fenêtres du signal audio discret dans le temps, afin de générer des blocs de signaux audio discrets dans le temps, réagissant au dispositif de détection de transitoires (12), pour utiliser une fenêtre plus courte pour la division en fenêtres lorsque le dispositif de détection de transitoires (12) détecte une zone transitoire ;
(c) un dispositif (104) destiné à la transformation temps/fréquence des blocs du signal audio discret dans le temps, pour générer des blocs de composantes spectrales ; et
(d) un dispositif (106) destiné à la quantification et au codage des blocs de composantes spectrales.

**15.** Procédé de codage d'un signal audio discret dans le temps, aux étapes suivantes consistant à :

(a) détecter une zone transitoire suivant l'une des revendications 1 à 9 ;
(b) diviser en fenêtres le signal audio discret dans le temps, avec une fenêtre courte lorsqu'il est détecté une zone transitoire, et avec une longue fenêtre lorsqu'il n'est pas détecté de zone transitoire, afin de générer des blocs de signaux audio discrets dans le temps ;

(c) transformer les blocs du signal audio discret dans le temps de la plage de temps en plage de fréquences, pour générer des blocs à composantes spectrales ; et

(d) quantifier et coder les blocs de composantes spectrales, pour obtenir un signal audio codé.

FIG.1

FIG.2

**FIG.3 (Stand der Technik)**

**FIG.4 (Stand der Technik)**